# EUROPÄISCHE PATENTSCHRIFT

(11) **EP 2 994 980 B1**
(45) Veröffentlichungstag und Bekanntmachung des Hinweises auf die Patenterteilung: **08.11.2017**
(21) Anmeldenummer: 13758784.6
(22) Anmeldetag: 27.08.2013
(51) Int. Cl.: H02K 15/06, H02K 3/52

(54) **DURCHGEHENDE, AUF SPULENTRÄGER GEWICKELTE STATORWICKLUNG**
CONTINUOUS STATOR WINDING WOUND ON A COIL CARRIER
ENROULEMENT DE STATOR TRAVERSANT ENROULÉ SUR UN SUPPORT DE BOBINE

(30) Priorität: 11.07.2013 EP 13176073
(43) Veröffentlichungstag der Anmeldung: 16.03.2016
(73) Patentinhaber: Siemens Aktiengesellschaft, 80333 München (DE)
(72) Erfinder: ECKERT, Rainer, 97616 Bad Neustadt / Herschfeld (DE); PAWELLEK, Jürgen, 97618 Unsleben (DE)
(86) Internationale Anmeldenummer: PCT/EP2013/067666
(87) Internationale Veröffentlichungsnummer: WO 2015/003757

(56) Entgegenhaltungen:
- EP-A1- 2 059 991
- EP-A2- 1 783 880
- DE-A1-102009 023 231
- US-A1- 2009 230 793

## Beschreibung

Die vorliegende Erfindung betrifft ein Herstellungsverfahren für eine Statorwicklung eines Stators, der eine Anzahl von Statorzähnen aufweist, die, ausgehend von einer in einem radialen Abstand von einer Zentralachse des Stators um die Zentralachse des Stators umlaufenden Verbindungsstruktur, nach radial außen ragen.

Die vorliegende Erfindung betrifft weiterhin einen Stator,
- wobei der Stator eine Anzahl von Statorzähnen aufweist, die, ausgehend von einer in einem radialen Abstand von einer Zentralachse des Stators um die Zentralachse umlaufenden Verbindungsstruktur, nach radial außen ragen,
- wobei auf den Statorzähnen Spulenträger angeordnet sind, so dass die Spulenträger von der Zentralachse des Stators radial beabstandet sind und tangential um die Zentralachse des Stators herum gesehen gleichmäßig um die Zentralachse des Stators herum verteilt angeordnet sind,
- wobei an einem axialen Ende der Spulenträger ein Schaltungsträger angeordnet ist,
- wobei auf die Spulenträger jeweils ein Leiterdraht gewickelt ist, so dass der auf den Spulenträger gewickelte Leiterdraht eine Spule einer Statorwicklung des Stators bildet.

Ein derartiger Stator kann beispielsweise der Stator eines Außenläufers sein. Alternativ kann der Stator das Innenteil eines sogenannten Stern-Joch-Pakets sein. Ein derartiges Stern-Joch-Paket ist aus der EP 2 549 622 A1 bekannt. Auch aus der DE 10 2009 023 231 A1 ist ein Stern-Joch-Paket bekannt, bei dem vor dem Aufschieben des Jochs auf den Stern bereits bewickelte Spulenträger auf den Stern aufgeschwenkt werden.

Aus der WO 2008/028 536 A1 ist ein Herstellungsverfahren für eine Statorwicklung eines Stators bekannt. An einem Hilfselement werden Spulenträger angeordnet, so dass die Spulenträger von einer Zentralachse des Hilfselements radial beabstandet sind und tangential um die Zentralachse des Hilfselements herum gesehen gleichmäßig um die Zentralachse des Hilfselements herum verteilt angeordnet sind. An dem Hilfselement wird radial innerhalb der Spulenträger ein Schaltungsträger angeordnet. Für jede Phase der Statorwicklung wird ein jeweiliger Leiterdraht auf der jeweiligen Phase zugeordnete Spulenträger gewickelt, so dass der auf die jeweiligen Spulenträger gewickelte jeweilige Leiterdraht jeweilige Spulen der Statorwicklung bildet. Der jeweilige Leiterdraht wird nach dem Bewickeln jeweils eines der Spulenträger über den Schaltungsträger zum jeweils nächsten zu bewickelnden Spulenträger der jeweiligen Phase geführt. Das Hilfselement wird derart relativ zum Stator angeordnet, dass die Zentralachse des Hilfselements mit der Zentralachse des Stators fluchtet. Sodann werden die mit den Spulen versehenen Spulenträger um eine im Bereich des Schaltungsträgers tangential zu den Zentralachsen verlaufende jeweilige Schwenkachse geschwenkt. Vor dem Verschwenken der Spulenträger werden Polschuhe in die Spulenträger eingesteckt. Die Spulenträger werden sodann zusammen mit den Polschuhen verschwenkt.

Aus der US 2009/0 230 793 A1 ist ein Herstellungsverfahren für eine Statorwicklung eines Stators bekannt, wobei der Stator eine Anzahl von Statorzähnen aufweist, die, ausgehend von einer in einem radialen Abstand von einer Zentralachse des Stators um die Zentralachse des Stators umlaufenden Verbindungsstruktur, nach radial innen ragen. Die einzelnen Spulenträger weisen jeweils einen ersten und einen zweiten Spulenträgerflansch auf, wobei im auf die Statorzähne aufgesetzten Zustand der erste Spulenträgerflansch der Verbindungsstruktur zugewandt und der zweite Spulenträgerflansch von der Verbindungsstruktur abgewandt ist. Der erste Spulenträgerflansch weist eine Einführnut zum Einführen des Leiterdrahtes in einen von den Spulenträgerflanschen begrenzten Wickelbereich des jeweiligen Spulenträgers auf. Die Einführnut verläuft als solche rein axial zur Zentralachse des Stators, weist jedoch an ihrem Ende eine Ausnehmung auf. Bei einem Teil der Spulenträger ist der erste Spulenträgerflansch größer als der zweite Spulenträgerflansch.

Beim Herstellen einer Statorwicklung eines Stators, dessen Statorzähne nach radial außen ragen, werden im Stand der Technik oftmals die Spulenträger einzeln mit einem jeweiligen Leiterdraht bewickelt. Danach werden die Spulenträger auf die Statorzähne aufgesteckt. Im Falle eines als Stern-Joch-Paket ausgebildeten Stators wird sodann das Joch auf den Stern aufgeschoben. Danach werden die sogenannten Phasentrenner eingeschossen, der Schaltungsträger aufgesteckt und innerhalb des Schaltungsträgers die Leiterdrähte der einzeln auf die Spulenträger gewickelten Leiterdrähte miteinander verbunden.

Insbesondere das Verbinden der Leiterdrähte der einzelnen Spulen miteinander ist fertigungstechnisch aufwändig und fehlerträchtig. Falls es manuell vorgenommen wird, ist es darüber hinaus zeitaufwändig und umständlich.

In der DE 102 31 596 A1 ist eine elektrische Maschine beschrieben, bei der komplexe Verschaltungsgitter für die Wicklungen entfallen können. Der Stator weist mehrere bewickelte Isolierelemente auf, die nacheinander mit demselben Wicklungsdraht bewickelt sind. Dadurch entstehen verkettete Spulenkörper in Form der Isolierelemente, die dann gemeinsam als Wicklungspaket am Stator eingesetzt werden.

Die Aufgabe der vorliegenden Erfindung besteht darin, Möglichkeiten zu schaffen, einen Stator, der nach außen ragende Statorzähne aufweist, auf einfachere Weise zu schalten.

Die Aufgabe wird durch ein Herstellungsverfahren mit den Merkmalen des Anspruchs 1 gelöst. Vorteilhafte Ausgestaltungen des erfindungsgemäßen Herstellungsverfahrens sind Gegenstand der abhängigen Ansprüche 2 bis 10.

Erfindungsgemäß wird ein Herstellungsverfahren für eine Statorwicklung eines Stators, der eine Anzahl von Statorzähnen aufweist, die, ausgehend von einer in einem radialen Abstand von einer Zentralachse des Stators um die Zentralachse des Stators umlaufenden Verbindungsstruktur, nach radial außen ragen, dadurch ausgestaltet,
- dass an einem Hilfselement Spulenträger angeordnet werden, so dass die Spulenträger von einer Zentralachse des Hilfselements radial beabstandet sind und tangential um die Zen tralachse des Hilfselements herum gesehen gleichmäßig um die Zentralachse des Hilfselements herum verteilt angeordnet sind,
- dass an dem Hilfselement radial innerhalb der Spulenträger ein Schaltungsträger angeordnet wird,
- dass für jede Phase der Statorwicklung ein jeweiliger Leiterdraht auf der jeweiligen Phase zugeordnete Spulenträger gewickelt wird, so dass der auf die jeweiligen Spulenträger gewickelte jeweilige Leiterdraht jeweilige Spulen der Statorwicklung bildet,
- dass der jeweilige Leiterdraht nach dem Bewickeln jeweils eines der Spulenträger über den Schaltungsträger zum jeweils nächsten zu bewickelnden Spulenträger der jeweiligen Phase geführt wird und
- dass das Hilfselement derart relativ zum Stator angeordnet wird, dass die Zentralachse des Hilfselements mit der Zentralachse des Stators fluchtet, und sodann die mit den Spulen versehenen Spulenträger um eine im Bereich des Schaltungsträgers tangential zu den Zentralachsen verlaufende jeweilige Schwenkachse geschwenkt werden, so dass die mit den Spulen versehenen Spulenträger von radial außen auf jeweils einen der Statorzähne aufgeschwenkt werden.

Das Aufschwenken kann nach Bedarf ausgebildet sein. Vorzugsweise werden die Spulenträger zum Aufschwenken auf die Statorzähne um mindestens 90° um die jeweilige Schwenkachse verschwenkt. Ab diesem Winkel sind die Spulenträger zum Bewickeln mit dem jeweiligen Leiterdraht gut zugänglich. Insbesondere können sie um 180° um die jeweilige Schwenkachse verschwenkt werden. Diese Ausgestaltung ist besonders kompakt. Weiterhin sind die Spulenträger in diesem Fall in einer ähnlichen Konfiguration wie nach dem Aufschwenken am Hilfselement angeordnet. Weiterhin kann es sich bei der Schwenkbewegung um eine reine Schwenkbewegung handeln, so dass auch der letzte Abschnitt der Bewegung der Spulenträger eine Schwenkbewegung ist. Alternativ kann der jeweilige Spulenträger beim Beenden der Schwenkbewegung unmittelbar vor dem jeweiligen Statorzahn positioniert sein, so dass der letzte Bewegungsabschnitt ein Aufschieben des jeweiligen Spulenträgers auf den jeweiligen Statorzahn ist.

Die Leiterdrähte der Phasen werden im Schaltungsträger vorzugsweise kreuzungsfrei geführt. Hierzu können die Leiterdrähte der Phasen im Schaltungsträger von Phase zu Phase alternativ radial oder axial versetzt geführt werden.

Wenn die Leiterdrähte der Phasen im Schaltungsträger axial versetzt geführt werden, weist der Schaltungsträger pro Phase vorzugsweise jeweils einen Teilträger auf. In diesem Fall wird zunächst einer der Teilträger an dem Hilfselement angeordnet. Der jeweils nächste Teilträger wird erst nach dem Wickeln des Leiterdrahtes zu den Spulen der jeweiligen Phase auf den jeweils vorhergehenden Teilträger aufgesetzt. Diese Vorgehensweise bietet sowohl fertigungstechnische Vorteile als auch Vorteile bezüglich der Einhaltung von aus Sicherheitsgründen einzuhaltenden Kriech- und Luftstrecken. Die Teilträger können untereinander identisch ausgebildet sein.

Es ist möglich, dass keine direkte Verbindung der Spulenträger mit dem Schaltungsträger besteht. Alternativ ist es möglich, dass die Spulenträger jeweils ein Scharnier aufweisen, über das sie jeweils mit dem Schaltungsträger verbunden sind.

In der Regel weisen die Spulenträger jeweils einen ersten und einen zweiten Spulenträgerflansch auf, wobei im auf die Statorzähne aufgeschwenkten Zustand der erste Spulenträgerflansch der Verbindungsstruktur zugewandt und der zweite Spulenträgerflansch von der Verbindungsstruktur abgewandt ist. Vorzugsweise weist der zweite Spulenträgerflansch eine Einführnut zum Einführen des Leiterdrahtes in einen von den Spulenträgerflanschen begrenzten Wickelbereich des jeweiligen Spulenträgers auf, wobei die Einführnut im auf die Statorzähne aufgeschwenkten Zustand nicht rein axial zur Zentralachse des Stators verläuft, sondern zumindest in einem Abschnitt eine Tangentialkomponente aufweist.

In der Regel ist der erste Spulenträgerflansch kleiner als der zweite Spulenträgerflansch.

Wie bereits erwähnt, kann das erfindungsgemäße Herstellungsverfahren bei einem Außenläufermotor angewendet werden. Ihre vollen Vorteile zeigt die vorliegende Erfindung jedoch, wenn sie bei einem als Stern-Joch-Paket ausgebildeten Stator angewendet wird, also nach dem Aufschwenken der mit den Spulen versehenen Spulenträger auf die Statorzähne axial zur Zentralachse des Stators ein Statorjoch auf die Statorzähne aufgeschoben wird.

Die Aufgabe wird weiterhin durch einen Stator mit den Merkmalen des Anspruchs 11 gelöst. Vorteilhafte Ausgestaltungen des erfindungsgemäßen Stators sind Gegenstand der abhängigen Ansprüche 12 bis 15.

Erfindungsgemäß ist ein Stator der eingangs genannten Art dadurch ausgestaltet, dass für jede Phase der Leiterdraht über den Schaltungsträger jeweils von Spulenträger zu Spulenträger der jeweiligen Phase geführt ist, dass die Leiterdrähte der Phasen im Schaltungsträger von Phase zu Phase axial versetzt geführt sind, dass der Schaltungsträger pro Phase jeweils einen Teilträger aufweist und dass die Teilträger in Richtung der Zentralachse des Stators gesehen aufeinander gestapelt sind.

Die vorteilhaften Ausgestaltungen des Stators korrespondieren im Wesentlichen mit denen des Herstellungsverfahrens. Es wird daher auf die obigen Ausführungen verwiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Hilfselement mit Spulenträgern im Längsschnitt,
- FIG 2: das Hilfselement von FIG 1 in einer Draufsicht,
- FIG 3: Spulenträger und einen Schaltungsträger ohne das Hilfselement von FIG 1 in einer perspektivischen Darstellung,
- FIG 4 und 5: Darstellungen alternativer Hilfselemente,
- FIG 6: das Hilfselement von FIG 1 in Verbindung mit einem Stator im Längsschnitt,
- FIG 7: einen Schnitt längs einer Linie VII-VII in FIG 6,
- FIG 8: das Hilfselement und den Stator von FIG 6 in einer perspektivischen Darstellung,
- FIG 9 und 10: Spulenträger und verschiedene mögliche Ausgestaltungen von Schaltungsträgern,
- FIG 11: eine mögliche Ausgestaltung eines Schaltungsträgers,
- FIG 12: einen Schaltungsträger und Spulenträger,
- FIG 13 und 14: einen Abschnitt je eines einzelnen Spulenträgers und
- FIG 15: einen als Stern-Joch-Paket ausgebildeten Stator.

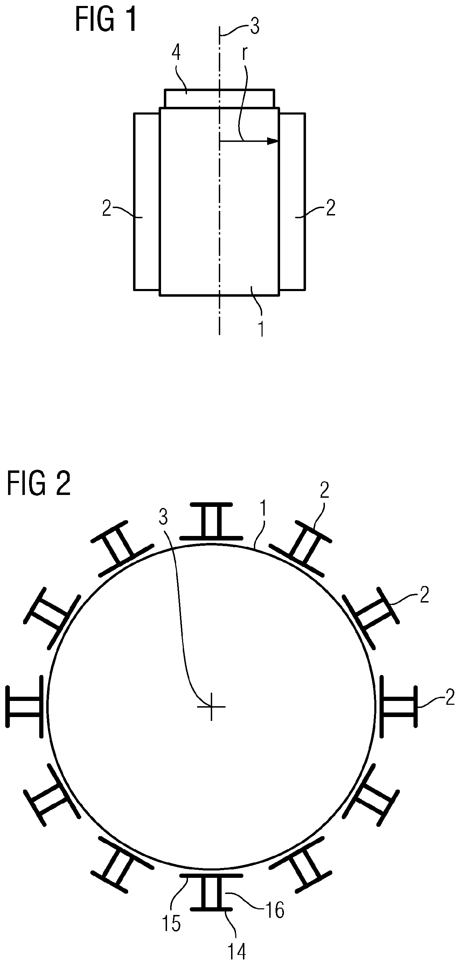

Zum Herstellen einer Statorwicklung werden (= Vorgang; Gegensatz: sind = Zustand) gemäß den FIG 1 bis 3 zunächst an einem Hilfselement 1 Spulenträger 2 angeordnet. Soweit nachfolgend allgemein auf die Spulenträger 2 Bezug genommen wird, wird nachstehend weiterhin das Bezugszeichen 2 verwendet. Die Spulenträger 2 sind jedoch jeweils einer von mehreren elektrischen Phasen a bis c zugeordnet. Soweit es konkret die Spulenträger 2 einer bestimmten Phase betrifft, wird das Bezugszeichen 2 nachstehend mit einem Kleinbuchstaben a bis c ergänzt. Die gleiche Ergänzung wird auch im Zusammenhang mit anderen Elementen verwendet werden, soweit es auf Zuordnung zur jeweiligen Phase a bis c ankommt.

Die Anordnung der Spulenträger 2 an dem Hilfselement 1 erfolgt derart, dass die Spulenträger 2 von einer Zentralachse 3 des Hilfselements 1 einen radialen Abstand r aufweisen, von der Zentralachse 3 des Hilfselements 1 also radial beabstandet sind. Die Anordnung der Spulenträger 2 an dem Hilfselement 1 erfolgt weiterhin derart, dass tangential um die Zentralachse 3 des Hilfselements 1 herum gesehen die Spulenträger 2 gleichmäßig um die Zentralachse 3 des Hilfselements 1 herum verteilt angeordnet sind.

An dem Hilfselement 1 wird (= Vorgang) weiterhin ein Schaltungsträger 4 angeordnet. Die Anordnung des Schaltungsträgers 4 erfolgt derart, dass der Schaltungsträger 4 radial innerhalb der Spulenträger 2 angeordnet ist. Die Anordnung des Schaltungsträgers 4 erfolgt weiterhin derart, dass der äußere Rand des Schaltungsträgers 4 in der Nähe eines der Enden der Spulenträger 2 angeordnet ist.

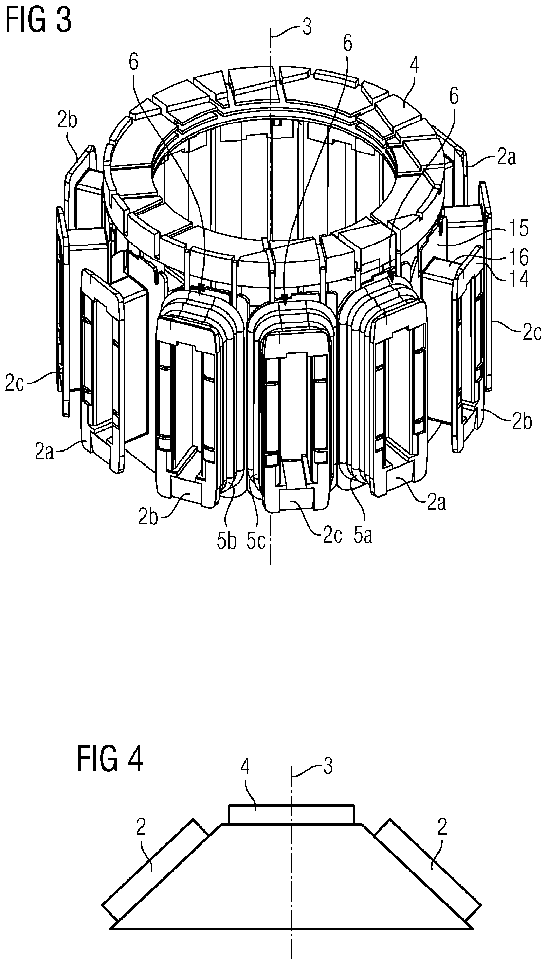

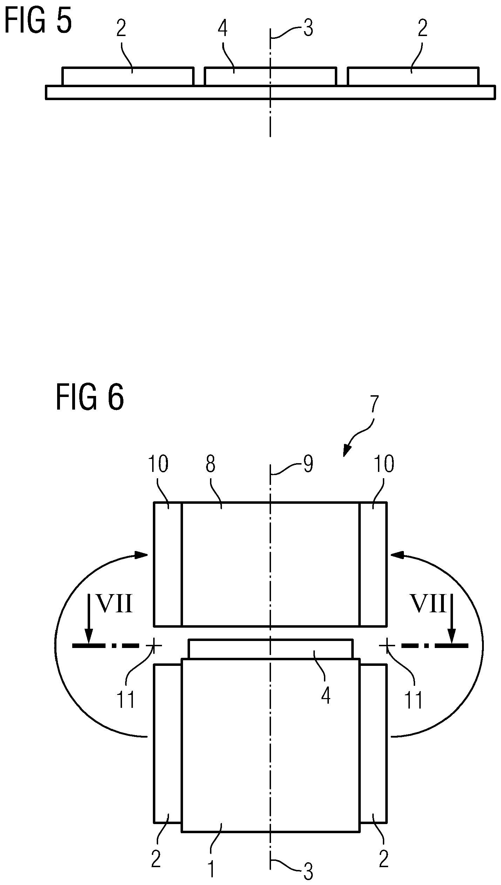

Es ist derzeit bevorzugt, dass das Hilfselement 1 eine im wesentlichen zylindrische Struktur aufweist, so dass die Spulenträger 2 im wesentlichen auf einem Zylindermantel des Hilfselements 1 angeordnet sind. Alternativ kann das Hilfselement 1, wie in den FIG 4 und 5 angedeutet, im wesentlichen die Form eines Kegelstumpfes oder einer Scheibe aufweisen.

Nach dem Anordnen der Spulenträger 2 und des Schaltungsträgers 4 an dem Hilfselement 1 werden die Spulenträger 2 bewickelt. Das Bewickeln der Spulenträger 2 erfolgt separat für jede der Phasen a bis c. Das Verfahren zum Bewickeln der Spulenträger 2 ist für jede Phase a bis c dasselbe. Es wird daher nachfolgend nur für eine der Phasen a bis c näher erläutert.

Zum Bewickeln der Spulenträger 2a der Phase a wird ein Leiterdraht 5a auf einen der Spulenträger 2a der Phase a gewickelt. Das Bewickeln des entsprechenden einzelnen Spulenträgers 2a erfolgt so wie im Stand der Technik auch und bedarf daher keiner näheren Erläuterung. Durch das Wickeln des Leiterdrahtes 5a auf den Spulenträger 2a der Phase a bildet der auf den Spulenträger 2a gewickelte Leiterdraht 5a eine Spule 6 einer Statorwicklung. Sodann wird der Leiterdraht 5a über den Schaltungsträger 4 zum nächsten zu bewickelnden Spulenträger 2a der entsprechenden Phase a geführt.

Dieser Vorgang - also das Bewickeln eines einzelnen Spulenträgers 2a der Phase a mit dem Leiterdraht 5a nebst nachfolgendem Führen des Leiterdrahtes 5a über den Schaltungsträger 4 zum nächsten Spulenträger 2a der entsprechenden Phase a - wird wiederholt, bis alle Spulenträger 2a der entsprechenden Phase a mit dem Leiterdraht 5a bewickelt sind. Der entscheidende Unterschied der erfindungsgemäßen Vorgehensweise zum Stand der Technik besteht somit darin, dass nicht die Spulenträger 2a der Phase a einzeln jeweils mit einem eigenen Leiterdraht bewickelt werden und danach eine Verbindung der Leiterdrähte im Schaltungsträger 4 erfolgt, sondern dass ein einziger, durchgehender Leiterdraht 5a verwendet wird, mittels dessen die Spulenträger 2a der entsprechenden Phase a nacheinander bewickelt werden.

Das Verfahren zum Bewickeln der Spulenträger 2 ist, wie bereits erwähnt, für jede Phase a bis c dasselbe. Es wird daher für die anderen Phasen b und c mit jeweils einem eigenen Leiterdraht 5b und 5c für die jeweiligen Spulenträger 2b und 2c der jeweiligen Phase b und c wiederholt.

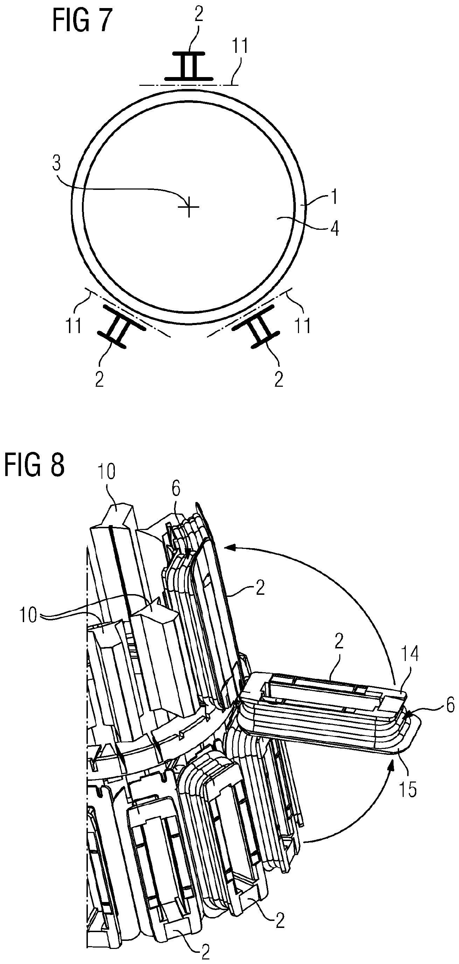

Die so hergestellte Statorwicklung, d.h. die Gesamtheit der Spulen 6, soll in einen Stator 7 (siehe FIG 6 bis 8) eingebracht werden, der eine Verbindungsstruktur 8 aufweist, die in einem radialen Abstand r' von einer Zentralachse 9 des Stators 7 um eine Zentralachse 9 des Stators 7 umläuft. Der Stator 7 weist eine Anzahl von Statorzähnen 10 auf. Die Statorzähne 10 ragen, ausgehend von der Verbindungsstruktur 8, nach radial außen. Zum Aufbringen der Statorwicklung wird das Hilfselement 1 gemäß den FIG 6 bis 8 derart relativ zum Stator 7 angeordnet, dass die Zentralachse 3 des Hilfselements 1 mit der Zentralachse 9 des Stators 7 fluchtet. Die Zentralachse 3 des Hilfselements 1 kann also in diesem Zustand als Fortsetzung der Zentralachse 9 des Stators 7 angesehen werden. Die Spulenträger 2 einschließlich der auf den Spulenträgern 2 angeordneten Spulen 6 - siehe insbesondere FIG 8 - werden in diesem Zustand um eine jeweilige Schwenkachse 11 geschwenkt.

Die jeweilige Schwenkachse 11 ist individuell für den jeweiligen Spulenträger 2 bestimmt. Die Schwenkachsen 11 verlaufen zwar - siehe insbesondere die FIG 6 und 7 - für alle Spulenträger 2 im Bereich des Schaltungsträgers 4. Die jeweilige Schwenkachse 11 verläuft jedoch, bezogen auf den jeweiligen Spulenträger 2, im Bereich des jeweiligen Spulenträgers 2 tangential zu den Zentralachsen 3, 9. In FIG 7 ist - rein beispielhaft - für einige der Spulenträger 2 die jeweilige Schwenkachse 11 eingezeichnet.

Durch das Verschwenken der Spulenträger 2 werden - siehe erneut FIG 8 - die mit den Spulen 6 versehenen Spulenträger 2 von radial außen auf jeweils einen der Statorzähne 10 aufgeschwenkt. Nach dem Aufschwenken der Spulenträger 2 auf die Statorzähne 10 sind somit die Spulenträger 2 auf den Statorzähnen 10 angeordnet. Analog zur vorherigen Anordnung an dem Hilfselement 1 sind die Spulenträger 2 von der Zentralachse 9 des Stators 7 radial beabstandet. Weiterhin sind sie analog zur vorherigen Anordnung an dem Hilfselement 1 tangential um die Zentralachse 9 des Stators 7 herum gesehen gleichmäßig um die Zentralachse 9 des Stators 7 herum verteilt angeordnet. Insbesondere sind die Spulenträger 2 nach dem Aufschwenken auf Statorzähne 10 in der Regel auf einem Zylindermantel um die Zentralachse 9 des Stators 7 herum angeordnet. Aufgrund der Lage der Schwenkachsen 11 ist weiterhin nach dem Aufschwenken der Spulenträger 2 auf die Statorzähne 10 an einem axialen Ende der Spulenträger 2 der Schaltungsträger 4 angeordnet.

Es ist möglich, dass das Hilfselement 1 mit den am Hilfselement 1 angeordneten Spulenträgern 2 und dem am Hilfselement 1 angeordneten Schaltungsträger 4 erst nach dem Bewickeln der Spulenträger 2 derart positioniert wird, dass die Zentralachse 3 des Hilfselements 1 mit der Zentralachse 9 des Stators 7 fluchtet. Alternativ ist es möglich, dass das Hilfselement 1 bereits vor dem Bewickeln der Spulenträger 2 entsprechend positioniert wird.

Durch das Herstellungsverfahren für die Statorwicklung (d.h. die Gesamtheit der Spulen 6) wird somit erreicht, dass zwar - wie im Stand der Technik auch - auf die Spulenträger 2 jeweils ein Leiterdraht 5 gewickelt ist, so dass der auf den Spulenträger 2 gewickelte Leiterdraht 5 eine Spule 6 der Statorwicklung des Stators 7 bildet. Im Unterschied zum Stand der Technik ist aufgrund des Herstellungsverfahrens jedoch für jede Phase a bis c der jeweilige Leiterdraht 5a bis 5c über den Schaltungsträger 4 jeweils von Spulenträger 2 zu Spulenträger 2 der jeweiligen Phase a bis c geführt. Ein verbinden von Leiterenden der Leiterdrähte 5a bis 5c im Schaltungsträger 4 ist nicht mehr erforderlich.

Im Rahmen der obenstehend in Verbindung mit den FIG 6 bis 8 erläuterten Vorgehensweise werden die Spulenträger 2 zum Aufschwenken auf die Statorzähne 10 um 180° um die jeweilige Schwenkachse 11 verschwenkt. Es ist jedoch bei entsprechender Ausgestaltung des Hilfselements 1 ebenso möglich, dass der Schwenkwinkel kleiner als 180° ist. Insbesondere liegt der Schwenkwinkel bei einer Ausgestaltung des Hilfselements 1 gemäß FIG 4 zwischen 90° und 180°. Beispielsweise kann er bei 150°, 135° oder 120° liegen. Bei der Ausgestaltung von FIG 5 liegt der Schwenkwinkel bei 90°. Dieser Wert sollte vorzugsweise nicht unterschritten werden.

Nachfolgend werden Ausgestaltungen der obenstehend in Verbindung mit den FIG 1 bis 8 erläuterten prinzipiellen Vorgehensweise der vorliegenden Erfindung näher erläutert. Die Ausgestaltungen sind nach Bedarf miteinander kombinierbar.

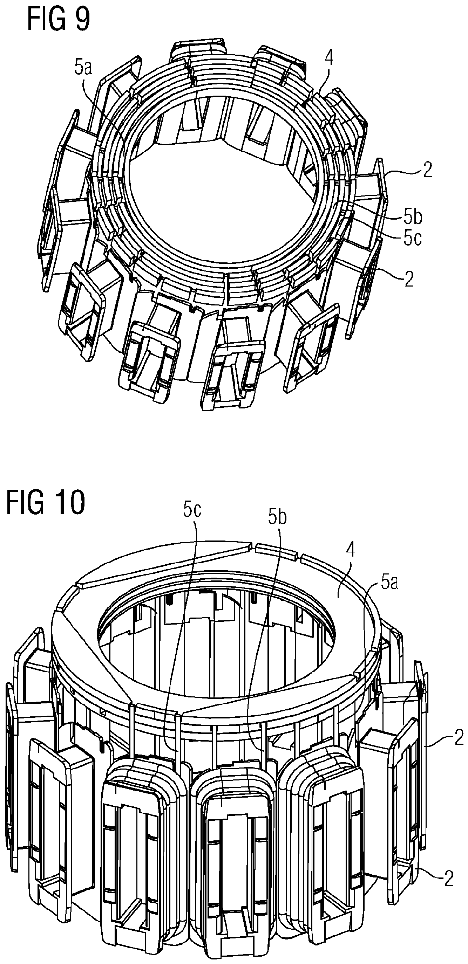

Innerhalb des Schaltungsträgers 4 werden die Leiterdrähte 5a bis 5c der Phasen a bis c vorzugsweise kreuzungsfrei geführt. Hierzu ist es beispielsweise gemäß FIG 9 möglich, dass die Leiterdrähte 5a bis 5c der Phasen a bis c im Schaltungsträger 4 von Phase a bis c zu Phase a bis c radial versetzt geführt werden. Eine Phase (beispielsweise die Phase a) wird also radial außen geführt, eine weitere Phase (beispielsweise die Phase b) radial mittig und eine weitere Phase (beispielsweise die Phase c) radial innen. Alternativ zu einer radial versetzten Führung der Leiterdrähte 5a bis 5c im Schaltungsträger 4 ist es gemäß FIG 10 möglich, dass die Leiterdrähte 5a bis 5c der Phasen a bis c im Schaltungsträger 4 von Phase a bis c zu Phase a bis c axial versetzt geführt werden.

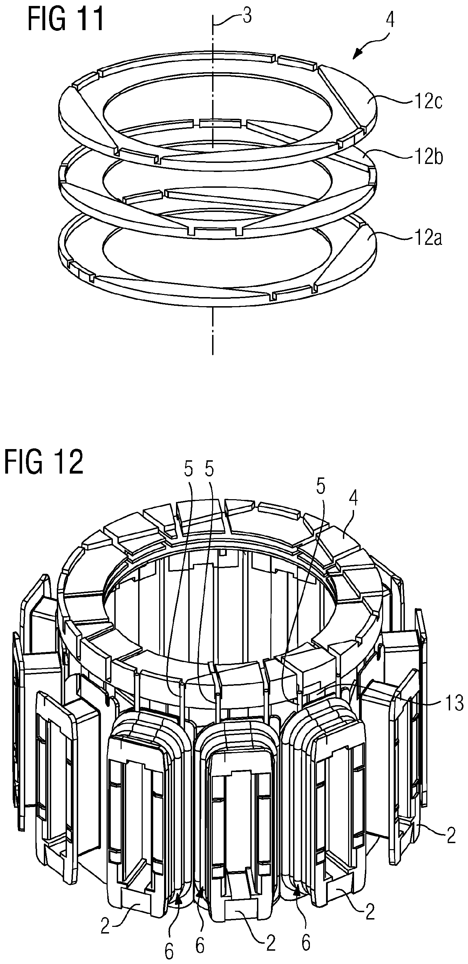

Im letztgenannten Fall - also der axial versetzten Führung - kann insbesondere der Schaltungsträger 4 pro Phase a bis c gemäß FIG 11 jeweils einen Teilträger 12a bis 12c aufweisen. In diesem Fall wird im Rahmen der Herstellung der Statorwicklung zunächst nur einer der Teilträger - beispielsweise der Teilträger 12a - an dem Hilfselement 1 angeordnet. Sodann werden die Spulenträger 2a der entsprechenden Phase a bewickelt. Danach wird der nächste Teilträger 12b auf den Teilträger 12b aufgesetzt, und es werden die Spulenträger 2b der nächsten Phase b bewickelt. Danach wird der nächste Teilträger 12c auf den Teilträger 12b aufgesetzt, und es werden die Spulenträger 2c der nächsten Phase c bewickelt. Nach dem Aufschwenken der Spulenträger 2 auf die Statorzähne 10 sind dadurch die Teilträger 12a bis 12c in Richtung der Zentralachse 9 des Stators 7 gesehen aufeinander gestapelt.

Im einfachsten Fall besteht vor dem Bewickeln der Spulenträger 2 mit den Leiterdrähten 5 keine direkte Verbindung der Spulenträger 2 mit dem Schaltungsträger 4. Alternativ ist es möglich, dass die Spulenträger 2 gemäß FIG 12 jeweils ein Scharnier 13 aufweisen. In diesem Fall sind die Spulenträger 2 über das jeweilige Scharnier 13 jeweils mit dem Schaltungsträger 4 verbunden. Dies gilt zumindest im Rahmen der Herstellung der Statorwicklung, während also die Spulenträger 2 an dem Hilfselement 1 angeordnet sind. Vorzugsweise gilt es auch für die fertige Statorwicklung, wenn also die Spulenträger 2 auf die Statorzähne 10 aufgeschwenkt sind.

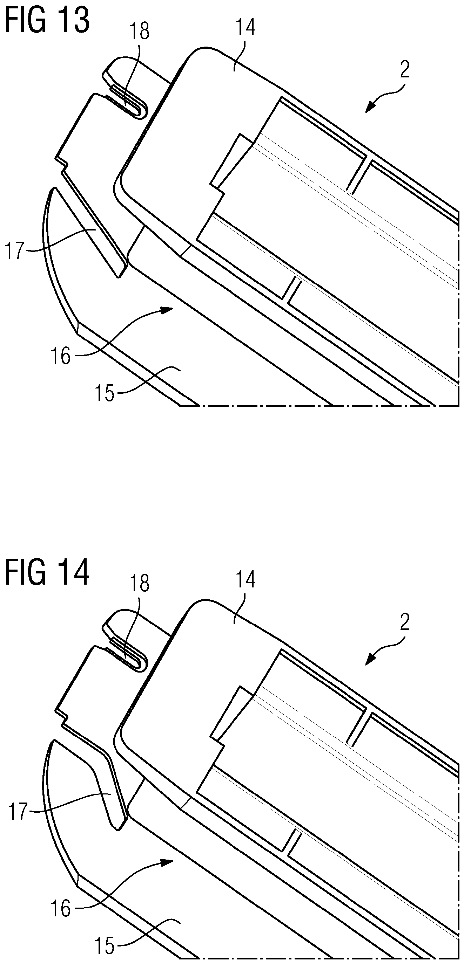

Die Spulenträger 2 - siehe die FIG 13 und 14 für einen einzelnen Spulenträger 2 - weisen in der Regel jeweils einen ersten Spulenträgerflansch 14 und einen zweiten Spulenträgerflansch 15 auf. Im auf einen der Statorzähne 10 aufgeschwenkten Zustand ist der jeweilige erste Spulenträgerflansch 14 der Verbindungsstruktur 8 zugewandt. Der jeweilige zweite Spulenträgerflansch 15 ist von der Verbindungsstruktur 8 abgewandt. Im an dem Hilfselement 1 angeordneten Zustand ist der jeweilige zweite Spulenträgerflansch 15 dem Hilfselement 1 zugewandt, der jeweilige erste Spulenträgerflansch 14 vom Hilfselement 1 abgewandt. Die Spulenträgerflansche 14, 15 begrenzen einen Wickelbereich 16 des jeweiligen Spulenträgers 2. In der Regel ist entsprechend der Darstellung der FIG 13 und 14 der erste Spulenträgerflansch 14 kleiner als der zweite Spulenträgerflansch 15.

Der zweite Spulenträgerflansch 15 weist gemäß den FIG 13 und 14 eine Einführnut 17 und eine Ausführnut 18 auf. Über die Einführnut 17 wird im Rahmen der Herstellung der Statorwicklung vor dem Bewickeln des jeweiligen Spulenträgers 2 der jeweilige Leiterdraht 5 in den Wickelbereich 16 des jeweiligen Spulenträgers 2 eingeführt. Über die Ausführnut 18 wird der jeweilige Leiterdraht 5 nach dem Bewickeln des jeweiligen Spulenträgers 2 aus dem Wickelbereich 16 des jeweiligen Spulenträgers 2 ausgeführt.

Zumindest die Einführnut 17 weist - bezogen auf eine Haupterstreckungsrichtung des jeweiligen Spulenträgers 2 - gemäß den FIG 13 und 14 einen nicht völlig geraden Verlauf auf. Gemäß FIG 13 verläuft die Einführnut 17 schräg zur Haupterstreckungsrichtung. Gemäß FIG 14 weist die Einführnut 17 mindestens zwei Abschnitte auf, wobei mindestens einer der Abschnitte nicht parallel zur Haupterstreckungsrichtung des jeweiligen Spulenträgers 2 verläuft. Im auf die Statorzähne 10 aufgeschwenkten Zustand verlaufen die Einführnuten 17 dadurch nicht rein axial zur Zentralachse 9 des Stators 7, sondern weisen zumindest in einem Abschnitt eine Tangentialkomponente auf.

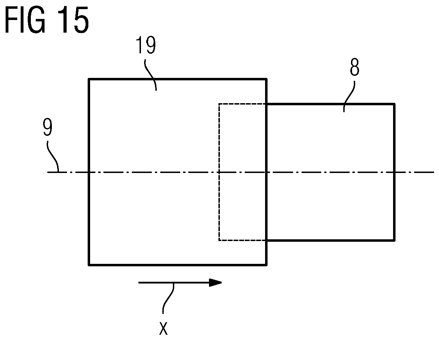

Die vorliegende Erfindung wird vorzugsweise in Verbindung mit einem als Stern-Joch-Paket ausgebildeten Stator 7 verwendet. In diesem Fall wird der Stern durch die Verbindungsstruktur 8 und die von der Verbindungsstruktur 8 nach radial außen ragenden Statorzähne 10 gebildet. Bei einer derartigen Ausgestaltung des Stators 7 wird gemäß FIG 15 nach dem Aufschwenken der mit den Spulen 6 versehenen Spulenträger 2 auf die Statorzähne 10 axial zur Zentralachse 9 des Stators 7 ein Statorjoch 19 auf die Statorzähne 10 aufgeschoben. Eine Aufschieberichtung x ist also parallel zur Zentralachse 9 des Stators 7 gerichtet. Dadurch werden zum einen die Spulenträger 2 unverlierbar fixiert, zum anderen wird dadurch der magnetische Rückschluss vervollständigt.

Die vorliegende Erfindung weist viele Vorteile auf. Insbesondere ist es möglich, die Spulen 6 pro Phase a bis c mittels eines jeweiligen durchgehenden Leiterdrahtes 5a bis 5c zu wickeln. Aufgrund des Verlaufs der Einführnuten 17 kann es nicht geschehen, dass beim Aufschwenken der Spulenträger 2 auf die Statorzähne 10 der Leiterdraht 5 unmittelbar an den Windungen der jeweiligen Spule 6 zu liegen kommt. Dadurch wird insbesondere die Einhaltung von Luft- und Kriechstrecken verbessert.

Zusammengefasst werden also an einem Hilfselement 1 Spulenträger 2 angeordnet, so dass sie von einer Zentralachse 3 des Hilfselements 1 radial beabstandet sind und tangential dazu gleichmäßig verteilt angeordnet sind. Radial innerhalb der Spulenträger 2 wird an dem Hilfselement 1 ein Schaltungsträger 4 angeordnet. Für die Phasen a bis c der Statorwicklung werden Leiterdrähte 5a bis 5c auf den Phasen a bis c zugeordnete Spulenträger 2a bis 2c gewickelt. Die auf die Spulenträger 2a bis 2c gewickelten Leiterdrähte 5a bis 5c bilden dadurch Spulen 6 der Statorwicklung. Die Leiterdrähte 5a bis 5c werden nach dem Bewickeln jeweils eines Spulenträgers 2a bis 2c über den Schaltungsträger 4 zum jeweils nächsten zu bewickelnden Spulenträger 2a bis 2c der jeweiligen Phase a bis c geführt. Das Hilfselement 1 wird derart relativ zu einem Stator 7 angeordnet, dass die Zentralachse 3 des Hilfselements 1 mit der Zentralachse 9 des Stators 7 fluchtet. Der Stator 7 weist eine Anzahl von Statorzähnen 10 auf, die, ausgehend von einer in einem radialen Abstand r' von einer Zentralachse 9 des Stators 7 um diese umlaufenden Verbindungsstruktur 8, nach radial außen ragen. Die mit den Spulen 6 versehenen Spulenträger 2 werden um eine im Bereich des Schaltungsträgers 4 tangential zu den Zentralachsen 3, 9 verlaufende jeweilige Schwenkachse 11 geschwenkt. Dadurch werden die mit den Spulen 6 versehenen Spulenträger 2 von radial außen auf jeweils einen der Statorzähne 10 aufgeschwenkt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für eine Statorwicklung eines Stators (7), der eine Anzahl von Statorzähnen (10) aufweist, die, ausgehend von einer in einem radialen Abstand (r¹) von einer Zentralachse (9) des Stators (7) um die Zentralachse (9) des Stators (7) umlaufenden Verbindungsstruktur (8), nach radial außen ragen,
- wobei an einem Hilfselement (1) Spulenträger (2) angeordnet werden, so dass die Spulenträger (2) von einer Zentralachse (3) des Hilfselements (1) radial beabstandet sind und tangential um die Zentralachse (3) des Hilfselements (1) herum gesehen gleichmäßig um die Zentralachse (3) des Hilfselements (1) herum verteilt angeordnet sind,
- wobei an dem Hilfselement (1) radial innerhalb der Spulenträger (2) ein Schaltungsträger (4) angeordnet wird,
- wobei für jede Phase (a bis c) der Statorwicklung ein jeweiliger Leiterdraht (5a bis 5c) auf der jeweiligen Phase (a bis c) zugeordnete Spulenträger (2a bis 2c) gewickelt wird, so dass der auf die jeweiligen Spulenträger (2a bis 2c) gewickelte jeweilige Leiterdraht (5a bis 5c) jeweilige Spulen (6) der Statorwicklung bildet,
- wobei der jeweilige Leiterdraht (5a bis 5c) nach dem Bewickeln jeweils eines der Spulenträger (2a bis 2c) über den Schaltungsträger (4) zum jeweils nächsten zu bewickelnden Spulenträger (2a bis 2c) der jeweiligen Phase (a bis c) geführt wird und
- wobei das Hilfselement (1) derart relativ zum Stator (7) angeordnet wird, dass die Zentralachse (3) des Hilfselements (1) mit der Zentralachse (9) des Stators (7) fluchtet, und sodann die mit den Spulen (6) versehenen Spulenträger (2) um eine im Bereich des Schaltungsträgers (4) tangential zu den Zentralachsen (3, 9) verlaufende jeweilige Schwenkachse (11) geschwenkt werden, so dass die mit den Spulen (6) versehenen Spulenträger (2) von radial außen auf jeweils einen der Statorzähne (10) aufgeschwenkt werden.

2. Herstellungsverfahren nach Anspruch 1, **dadurch gekennzeichnet , dass** die Spulenträger (2) zum Aufschwenken auf die Statorzähne (10) um mindestens 90° um die jeweilige Schwenkachse (11) verschwenkt werden.

3. Herstellungsverfahren nach Anspruch 2, **dadurch gekennzeichnet , dass** die Spulenträger (2) zum Aufschwenken auf die Statorzähne (10) um 180° um die jeweilige Schwenkachse (11) verschwenkt werden.

4. Herstellungsverfahren nach Anspruch 1, 2 oder 3, **da- durch gekennzeichnet** , dass die Leiterdrähte (5a bis 5c) der Phasen (a bis c) im Schaltungsträger (4) von Phase (a bis c) zu Phase (a bis c) radial versetzt geführt werden.

5. Herstellungsverfahren nach Anspruch 1, 2 oder 3, **da- durch gekennzeichnet** , dass die Leiterdrähte (5a bis 5c) der Phasen (a bis c) im Schaltungsträger (4) von Phase (a bis c) zu Phase (a bis c) axial versetzt geführt werden.

6. Herstellungsverfahren nach Anspruch 5, **dadurch gekennzeichnet , dass** der Schaltungsträger (4) pro Phase (a bis c) jeweils einen Teilträger (12a bis 12c) aufweist, dass zunächst einer der Teilträger (12a bis 12c) an dem Hilfselement (1) angeordnet wird und dass der jeweils nächste Teilträger (12a bis 12c) erst nach dem Wickeln des Leiterdrahtes (5a bis 5c) zu den Spulen (6) der jeweiligen Phase (a bis c) auf den jeweils vorhergehenden Teilträger (12a bis 12c) aufgesetzt wird.

7. Herstellungsverfahren nach einem der obigen Ansprüche, **dadurch gekennzeichnet , dass** die Spulenträger (2) jeweils ein Scharnier (13) aufweisen, über das sie jeweils mit dem Schaltungsträger (4) verbunden sind.

8. Herstellungsverfahren nach einem der obigen Ansprüche, **dadurch gekennzeichnet , dass** die Spulenträger (2) jeweils einen ersten und einen zweiten Spulenträgerflansch (14, 15) aufweisen, dass im auf die Statorzähne (10) aufgeschwenkten Zustand der erste Spulenträgerflansch (14) der Verbindungsstruktur (8) zugewandt und der zweite Spulenträgerflansch (15) von der Verbindungsstruktur (8) abgewandt ist, dass der zweite Spulenträgerflansch (15) eine Einführnut (17) zum Einführen des Leiterdrahtes (5) in einen von den Spulenträgerflanschen (14, 15) begrenzten Wickelbereich (16) des jeweiligen Spulenträgers (2) aufweist und dass die Einführnut (17) im auf die Statorzähne (10) aufgeschwenkten Zustand nicht rein axial zur Zentralachse (9) des Stators (7) verläuft, sondern zumindest in einem Abschnitt eine Tangentialkomponente aufweist.

9. Herstellungsverfahren nach Anspruch 8, **dadurch gekennzeichnet, dass** der erste Spulenträgerflansch (14) kleiner ist als der zweite Spulenträgerflansch (15).

10. Herstellungsverfahren nach einem der obigen Ansprüche, **dadurch gekennzeichnet, dass** nach dem Aufschwenken der mit den Spulen (6) versehenen Spulenträger (2) auf die Statorzähne (10) axial zur Zentralachse (9) des Stators (7) ein Statorjoch (19) auf die Statorzähne (10) aufgeschoben wird.

11. Stator,
- wobei der Stator eine Anzahl von Statorzähnen (10) aufweist, die, ausgehend von einer in einem radialen Abstand (r') von einer Zentralachse (9) des Stators um die Zentralachse (9) umlaufenden Verbindungsstruktur (8), nach radial außen ragen,
- wobei auf den Statorzähnen (10) Spulenträger (2) angeordnet sind, so dass die Spulenträger (2) von der Zentralachse (9) des Stators radial beabstandet sind und tangential um die Zentralachse (9) des Stators herum gesehen gleichmäßig um die Zentralachse (9) des Stators herum verteilt angeordnet sind,
- wobei an einem axialen Ende der Spulenträger (2) ein Schaltungsträger (4) angeordnet ist,
- wobei auf die Spulenträger (2) jeweils ein Leiterdraht (5) gewickelt ist, so dass der auf den Spulenträger (2) gewickelte Leiterdraht (5) eine Spule (6) einer Statorwicklung des Stators bildet,
- wobei für jede Phase (a bis c) der Leiterdraht (5a bis 5c) über den Schaltungsträger (4) jeweils von Spulenträger (2a bis 2c) zu Spulenträger (2a bis 2c) der jeweiligen Phase (a bis c) geführt ist,
- wobei die Leiterdrähte (5a bis 5c) der Phasen (a bis c) im Schaltungsträger (4) von Phase (a bis c) zu Phase (a bis c) axial versetzt geführt sind,
- wobei der Schaltungsträger (4) pro Phase (a bis c) jeweils einen Teilträger (12a bis 12c) aufweist und dass die Teilträger (12a bis 12c) in Richtung der Zentralachse (9) des Stators gesehen aufeinander gestapelt sind.

12. Stator nach Anspruch 11, **dadurch gekennzeichnet, dass** die Spulenträger (2) jeweils ein Scharnier (13) aufweisen, über das sie jeweils mit dem Schaltungsträger (4) verbunden sind.

13. Stator nach Anspruch 11 oder 12, **dadurch ge- kennzeichnet,** dass die Spulenträger (2) jeweils einen ersten und einen zweiten Spulenträgerflansch (14, 15) aufweisen, dass der erste Spulenträgerflansch (14) der Verbindungsstruktur (8) zugewandt und der zweite Spulenträgerflansch (15) von der Verbindungsstruktur (8) abgewandt ist, dass der zweite Spulenträgerflansch (15) eine Einführnut (17) aufweist, über die der Leiterdraht (5) in einen von den Spulenträgerflanschen (14, 15) begrenzten Wickelbereich (16) des jeweiligen Spulenträgers (2) eingeführt ist, und dass die Einführnut (17) nicht rein axial verläuft, sondern zumindest in einem Abschnitt eine Tangentialkomponente aufweist.

14. Stator nach Anspruch 13, **dadurch gekennzeichnet, dass** der erste Spulenträgerflansch (14) kleiner ist als der zweite Spulenträgerflansch (15).

15. Stator nach einem der Ansprüche 11 bis 14, **dadurch gekennzeichnet, dass** auf die Statorzähne (10) ein Statorjoch (19) aufgeschoben ist.

## Claims

1. Production method for producing a stator winding of a stator (7) having a plurality of stator teeth (10) which protrude radially outward starting from a connecting structure (8) that extends circumferentially around a central axis (9) of the stator (7) spaced at a radial distance (r') from the central axis (9) of the stator (7),
- wherein bobbins (2) are arranged on an auxiliary element (1) in such a way that the bobbins (2) are spaced at a radial distance from a central axis (3) of the auxiliary element (1) and, viewed tangentially around the central axis (3) of the auxiliary element (1), are arranged in a uniformly distributed manner around the central axis (3) of the auxiliary element (1),
- wherein a circuit carrier (4) is arranged on the auxiliary element (1) radially inside the bobbins (2),
- wherein, for each phase (a to c) of the stator winding, a respective conductor wire (5a to 5c) is wound onto bobbins (2a to 2c) associated with the respective phase (a to c) in such a way that the respective conductor wire (5a to 5c) wound onto the respective bobbins (2a to 2c) forms respective coils (6) of the stator winding,
- wherein after one of the bobbins (2a to 2c) has been wound in each case, the respective conductor wire (5a to 5c) is routed via the circuit carrier (4) to the next bobbin (2a to 2c) of the respective phase (a to c) that is to be wound in each case, and
- wherein the auxiliary element (1) is arranged relative to the stator (7) in such a way that the central axis (3) of the auxiliary element (1) is aligned with the central axis (9) of the stator (7), and the bobbins (2) provided with the coils (6) are then pivoted about a respective pivot axis (11) that extends tangentially to the central axes (3, 9) in the vicinity of the circuit carrier (4) in such a way that the bobbins (2) provided with the coils (6) are pivoted up onto one of the stator teeth (10) in each case from radially outside.

2. Production method according to claim 1, **characterised in that** in order to be pivoted up onto the stator teeth (10), the bobbins (2) are pivoted through at least 90° about the respective pivot axis (11).

3. Production method according to claim 2, **characterised in that** in order to be pivoted up onto the stator teeth (10), the bobbins (2) are pivoted through 180° about the respective pivot axis (11).

4. Production method according to claim 1, 2 or 3, c**haracterised in tha**t the conductor wires (5a to 5c) of the phases (a to c) are routed in the circuit carrier (4) in a radially offset manner from phase (a to c) to phase (a to c).

5. Production method according to claim 1, 2 or 3, **characterised in that** the conductor wires (5a to 5c) of the phases (a to c) are routed in the circuit carrier (4) in an axially offset manner from phase (a to c) to phase (a to c).

6. Production method according to claim 5, **characterised in that** the circuit carrier (4) has, per phase (a to c), a separate carrier section (12a to 12c) in each case, that initially one of the carrier sections (12a to 12c) is arranged on the auxiliary element (1), and that the next carrier section (12a to 12c) in each case is not mounted onto the respective previous carrier section (12a to 12c) until after the conductor wire (5a to 5c) has been wound to form the coils (6) of the respective phase (a to c).

7. Production method according to one of the above claims, **characterised in that** each of the bobbins (2) has a respective hinge (13) via which it is connected to the circuit carrier (4).

8. Production method according to one of the above claims, **characterised in that** each of the bobbins (2) has a first and a second bobbin flange (14, 15), that in the state pivoted onto the stator teeth (10) the first bobbin flange (14) faces toward the connecting structure (8) and the second bobbin flange (15) faces away from the connecting structure (8), that the second bobbin flange (15) has a lead-in groove (17) for introducing the conductor wire (5) into a winding region (16) of the respective bobbin (2) that is delimited by the bobbin flanges (14, 15), and that in the state pivoted onto the stator teeth (10) the lead-in groove (17) does not extend truly axially with respect to the central axis (9) of the stator (7), but has a tangential component in at least one section.

9. Production method according to claim 8, **characterised in that** the first bobbin flange (14) is smaller than the second bobbin flange (15).

10. Production method according to one of the above claims, **characterised in that** after the bobbins (2) provided with the coils (6) have been pivoted up onto the stator teeth (10), a stator yoke (19) is push-fitted onto the stator teeth (10) axially with respect to the central axis (9) of the stator (7).

11. Stator,
- wherein the stator has a plurality of stator teeth (10) which protrude radially outward starting from a connecting structure (8) that extends circumferentially around a central axis (9) of the stator spaced at a radial distance (r') from the central axis (9),
- wherein bobbins (2) are arranged on the stator teeth (10) in such a way that the bobbins (2) are spaced at a radial distance from the central axis (9) of the stator and, viewed tangentially around the central axis (9) of the stator, are arranged in a uniformly distributed manner around the central axis (9) of the stator,
- wherein a circuit carrier (4) is arranged at an axial end of the bobbins (2),
- wherein a conductor wire (5) is wound onto each of the bobbins (2) in such a way that the conductor wire (5) wound onto the bobbin (2) forms a coil (6) of a stator winding of the stator, and
- wherein, for each phase (a to c), the conductor wire (5a to 5c) is routed via the circuit carrier (4) in each case from bobbin (2a to 2c) to bobbin (2a to 2c) of the respective phase (a to c)
- wherein the conductor wires (5a to 5c) of the phases (a to c) are routed in an axially offset manner in the circuit carrier (4) from phase (a to c ) to phase (a to c),
- wherein the circuit carrier (4) has one carrier section (12a to 12c) per phase (a to c) in each case and the carrier sections (12a to 12c) are stacked one on top of the other, viewed in the direction of the central axis (9) of the stator.

12. Stator according to claim 11, **characterised in that** each of the bobbins (2) has a hinge (13) via which it is connected to the circuit carrier (4).

13. Stator according to one of claims 11 or 12, **characterised in that** each of the bobbins (2) has a first and a second bobbin flange (14, 15), that the first bobbin flange (14) faces toward the connecting structure (8) and the second bobbin flange (15) faces away from the connecting structure (8), that the second bobbin flange (15) has a lead-in groove (17) via which the conductor wire (5) is introduced into a winding region (16) of the respective bobbin (2) that is delimited by the bobbin flanges (14, 15), and that the lead-in groove (17) does not extend truly axially, but has a tangential component in at least one section.

14. Stator according to claim 13, **characterised in that** the first bobbin flange (14) is smaller than the second bobbin flange (15).

15. Stator according to one of claims 11 to 14, **characterised in that** a stator yoke (19) is push-fitted onto the stator teeth (10).

## Revendications

1. Procédé de fabrication d'un enroulement statorique d'un stator (7), qui a un certain nombre de dents (10) statoriques, qui, à partir d'une structure (8) de liaison, à une distance (r') radiale d'un axe (9) central du stator (7), faisant le tour de l'axe (9) central du stator, font saillie vers l'extérieur radialement,
- dans lequel on met, sur un élément (1) auxiliaire, des porte-bobines (2), de manière à ce que les porte-bobines (2) soient à distance radialement d'un axe (3) central de l'élément (1) auxiliaire et, considéré tangentiellement autour de l'axe (3) central de l'élément (1) auxiliaire, soient répartis uniformément autour de l'axe (3) central de l'élément (1) auxiliaire,
- dans lequel on met, sur l'élément (1) auxiliaire, radialement à l'intérieur du porte-bobine (1), un porte-circuit (4),
- dans lequel, pour chaque phase (a à c) de l'enroulement statorique, on enroule un fil (5a à 5c) conducteur respectif sur le porte-bobine (2a à 2c) associé à la phase (a à c) respective, de manière à ce que le fil (5a à 5c) conducteur respectif, enroulé sur le porte-bobine (2a à 2c) respectif, forme des bobines (6) respectives de l'enroulement statorique,
- dans lequel on fait passer le fil (5a à 5c) conducteur respectif, après l'enroulement de l'un des porte-bobines (2a à 2c), par le porte-circuit (4) vers respectivement le porte-bobine (2a à 2c) suivant à enrouler de la phase (a à c) respective et
- dans lequel on met l'élément (1) auxiliaire par rapport au stator (7), de manière à aligner l'axe (3) central de l'élément (1) auxiliaire sur l'axe (9) central du stator (7) et ensuite on fait pivoter les porte-bobines (2) munis des bobines (6) autour d'un axe (11) de pivotement respectif s'étendant dans la région du porte-circuit (4) tangentiellement aux axes (3, 9) centraux, de manière à faire pivoter les porte-bobines (2) pourvus des bobines (6) de l'extérieur radialement sur respectivement l'une des dents (10) statoriques.

2. Procédé de fabrication suivant la revendication 1, **caractérisé en ce que** l'on fait pivoter les porte-bobines (2) pour les faire pivoter sur les dents (10) statorique d'au moins 90° autour de l'axe (11) de pivotement respectif.

3. Procédé de fabrication suivant la revendication 2, **caractérisé en ce que** l'on fait pivoter les porte-bobines (2) pour les faire pivoter sur les dents (10) statorique de 180° autour de l'axe (11) de pivotement respectif.

4. Procédé de fabrication suivant la revendication 1, 2 ou 3, **caractérisé en ce que** l'on fait passer, de manière décalée radialement, d'une phase (a à c) à une phase (a à c), les fils (5a à 5c) conducteurs des phases (a à c) dans le porte-circuit (4).

5. Procédé de fabrication suivant la revendication 1, 2 ou 3, **caractérisé en ce que** l'on fait passer, d'une manière décalée axialement, d'une phase (a à c) à une phase (a à c), les fils (5a à 5c) conducteurs des phases (a à c) dans le porte-circuit (4).

6. Procédé de fabrication suivant la revendication 5, **caractérisé en ce que** le porte-circuit (4) a, par phase (a à c), respectivement un sous-support (12a à 12c), **en ce que** l'on met d'abord l'un des sous-supports (12a à 12c) sur l'élément (1) auxiliaire et **en ce que** l'on ne met le sous-support (12a à 12c) suivant sur le sous-support (12a à 12c) précédent qu'après l'enroulement du fil (5a à 5c) conducteur en les bobines (6) de la phase (a à c) respective.

7. Procédé de fabrication suivant l'une des revendications précédentes, **caractérisé en ce que** les porte-bobines (2) ont chacun une charnière (13) par laquelle ils sont reliés au porte-circuit (4).

8. Procédé de fabrication suivant l'une des revendications précédentes, **caractérisé en ce que** les porte-bobines (2) ont chacun une première et une deuxième brides (14, 15) de porte-bobine **en ce que**, dans l'état pivoté sur les dents (10) statoriques, la première bride (14) de porte-bobine est tournée vers la structure (8) de liaison et la deuxième bride (15) de porte-bobine est éloignée de la structure (8) de liaison, **en ce que** la deuxième bride (15) de porte-bobine a une rainure (17) d'introduction pour introduire le fil (5) conducteur dans une partie d'enroulement délimitée par les brides (14, 15) de porte-bobine du porte-bobine (2) respectif et **en ce que** la rainure (17) d'introduction ne s'étend pas, dans l'état basculé sur les dents (10) statoriques, purement axialement par rapport à l'axe (9) central du stator (7), mais a une composante tangentielle au moins dans un segment.

9. Procédé de fabrication suivant la revendication 8, **caractérisé en ce que** la première bride (14) de porte-bobine est plus petite que la deuxième bride (15) de porte-bobine.

10. Procédé de fabrication suivant l'une des revendications précédentes, **caractérisé en ce qu'**après le pivotement du porte-bobine pourvu des bobines (6) sur les dents (10) statoriques, une culasse (19) statorique est enfilée sur les dents (10) statoriques, axialement par rapport à l'axe (9) central du stator (10).

11. Stator,
- dans lequel le stator a un certain nombre de dents (10) statoriques, qui, à partir d'une structure (8) de liaison, à une distance (r') radiale d'un axe (9) central du stator (7), faisant le tour de l'axe (9) central du stator, font saillie vers l'extérieur radialement,
- dans lequel des porte-bobines (2) sont mis sur les dents (10) statoriques, de manière à ce que les porte-bobines (2) soient à distance radialement d'un axe (9) central de l'élément (1) auxiliaire et, considéré tangentiellement autour de l'axe (9) central de l'élément (1) auxiliaire, soient répartis uniformément autour de l'axe (9) central de l'élément (1) auxiliaire,
- dans lequel un porte-circuit (4) est mis à une extrémité axiale du porte-bobine (2),
- dans lequel un fil (5) conducteur est enroulé respectivement sur les porte-bobines (2), de manière à ce que le fil (5) conducteur enroulé sur le porte-bobine (2) forme une bobine (6) d'un enroulement statorique du stator,
- dans lequel, pour chaque phase (a à c), le fil (5a à 5c) conducteur passe par le porte-circuit (4) respectivement d'un porte-bobine (2a à 2c) à un porte-bobine (2a à 2c) de la phase (a à c) respective,
- dans lequel les fils (5a à 5c) conducteurs des phases (a à c) passent, d'une manière décalée axialement, d'une phase (a à c) à une phase (a à c) dans le porte-circuit (4),
- dans lequel le porte-circuit (4) a, par phase (a à c), respectivement un sous-support (12a à 12c) et en ce que les sous-supports (12a à 12c) sont empilés les uns sur les autres considéré dans la direction de l'axe (9) central du stator.

12. Stator suivant la revendication 11, **caractérisé en ce que** les porte-bobines (2) ont chacun une charnière (13) par laquelle ils sont reliés respectivement au porte-circuit (4).

13. Stator suivant la revendication 11 ou 12, **caractérisé en ce que** les porte-bobines (2) ont chacun une première et une deuxième brides (14, 15) de porte-bobine **en ce que**, dans l'état pivoté sur les dents (10) statoriques, la première bride (14) de porte-bobine est tournée vers la structure (8) de liaison et la deuxième bride (15) de porte-bobine est éloignée de la structure (8) de liaison, **en ce que** la deuxième bride (15) de porte-bobine a une rainure (17) d'introduction pour introduire le fil (5) conducteur dans une partie d'enroulement délimitée par les brides (14, 15) de porte-bobine du porte-bobine (2) respectif et **en ce que** la rainure (17) d'introduction ne s'étend pas d'une manière purement axiale, mais a une composante tangentielle au moins dans un segment.

14. Stator suivant la revendication 13, **caractérisé en ce que** la première bride (14) de porte-bobine est plus petite que la deuxième bride (15) de porte-bobine.

15. Stator suivant l'une des revendications 11 à 14, **caractérisé en ce qu'**une culasse (19) statorique est enfilée sur les dents (10) statoriques.
